# EUROPÄISCHE PATENTSCHRIFT

(11) **EP 0 417 427 B1**
(45) Veröffentlichungstag und Bekanntmachung des Hinweises auf die Patenterteilung: **01.12.1993**
(21) Anmeldenummer: 90113563.2
(22) Anmeldetag: 16.07.1990
(51) Int. Cl.: B60C 23/04

(54) **Einrichtung zur Überwachung des Druckes eines Fahrzeugreifens**
Apparatus for monitoring the pressure of a vehicle tyre
Appareil de surveillance de la pression d'un pneumatique de véhicule

(30) Priorität: 09.09.1989 DE 3930092
(43) Veröffentlichungstag der Anmeldung: 20.03.1991
(73) Patentinhaber: WABCO Vermögensverwaltungs-GmbH, D-30432 Hannover (DE)
(72) Erfinder: Bartscher, Peter, D-3000 Hannover 91 (DE); Singbartl, Günther, D-3000 Hannover (DE); Stegemann, Gerhard, D-3216 Salzhemmendorf (DE); Petersen, Erwin, Dr., D-3050 Wunstorf 1 (DE); Schniggenfittich, Manfred, D-3000 Hannover 91 (DE); Ulrich, Helmut, D-3257 Springe 1 (DE); Reinecke, Erich, D-3167 Burgdorf (DE)
(74) Vertreter: Schrödter, Manfred, Dipl.-Ing.

(56) Entgegenhaltungen:
- EP-A- 0 072 768
- EP-A- 0 251 355
- BE-A- 500 756
- DE-A- 2 511 099
- DE-A- 2 813 058
- US-A- 3 828 149
- US-A- 3 978 448
- US-A- 4 425 558

## Beschreibung

Die Erfindung betrifft eine Einrichtung zur Überwachung des Druckes eines Fahrzeugreifens gemäß dem Oberbegriff des Patentanspruchs 1.

Eine solche Einrichtung ist durch die DE-A-28 13 058 vorbekannt. Die vorbekannte Einrichtung tastet mit einer am Fahrzeugrad angeordneten druckempfindlichen Einrichtung den Reifendruck ab und erzeugt bei unterschrittenem vorgegebenen Reifendruck an ihrem Druckauslaß ein Ausgangssignal in Form eines Signaldruckes, der dem dann vorhandenen Reifendruck entspricht. Mit diesem Signaldruck wird ein Stellglied einer ebenfalls am Fahrzeugrad angeordneten Signalübertragungseinrichtung betätigt, derart, daß dieses einen Hub ausführt. Ein achsfest angeordneter Sensor tastet die Stellung des Stellgliedes ab und erkennt dadurch einen Reifendruck, der unterhalb des vorgegebenen Reifendruckes liegt. Eine dementsprechende Information des Sensors ist über eine Auswerteschaltung einer Anzeigeeinrichtung, z.B. im Fahrerhaus, zuführbar.

Bei einem Reifendruck gleich dem oder höher als der vorgegebene Reifendruck steht, der konstruktiven Gegebenheit der druckempfindlichen Einrichtung entsprechend, an deren Druckausgang kein Signaldruck an. Infolge dessen befindet sich das Stellglied der Signalübertragungseinrichtung, federbelastet, in einer Ausgangsstellung in der keine Anzeige erfolgt, bzw. der Sensor erkennt, daß der vorhandene Reifendruck nicht unterhalb des vorgegebenen Reifensolldruckes liegt.

Das Stellglied kann aber auch die vorerwähnte nichtanzeigende Ausgangsposition einnehmen, wenn infolge stark abgefallenem Reifendruckes der das Stellglied beaufschlagende Signaldruck so niedrig geworden ist, daß die dem Signaldruck entgegengerichtete Kraft einer dem Stellglied zugeordneten Rückholfeder überwiegt. Die vorbekannte Einrichtung hat daher den Nachteil, daß die Reifendrucküberwachung nur bis zu einem minimalen Reifendruck, dessen Höhe im wesentlichen durch die Kraft der Rückholfeder bestimmt ist, zuverlässig erfolgen kann.

Der Erfindung liegt daher die Aufgabe zugrunde, eine Einrichtung der eingangs erwähnten Art so zu verbessern, daß im Vergleich zu der eingangs erwähnten Einrichtung ein unter den Solldruck abfallender Reifendruck auch noch bei gänzlich entleertem Reifen angezeigt bleibt.

Diese Aufgabe wird durch die im Patentanspruch 1 angegebene Erfindung gelöst. Weiterbildungen und vorteilhafte Ausführungsbeispiele sind in den Unteransprüchen angegeben.

In einer Weiterbildung hat die Erfindung den Vorteil, daß diese Anzeige bei eingeschaltetem und nicht eingeschaltetem elektrischen bzw. elektronischen Teil der Reifendrucküberwachung durch ein Signal wahrnehmbar ist.

Die Erfindung hat weiterhin den Vorteil, daß mit ihr während des Auffüllens eines entleerten Reifens das Erreichen des vorgegebenen Reifensolldruckes, sowie auch die Funktionstüchtigkeit der druckempfindlichen Einrichtung erkennbar ist.

Die Erfindung wird anhand eines Ausführungsbeispiels, das in der Zeichnung dargestellt ist, näher erläutert.

Es zeigen:
- **Fig.1**: eine am Fahrzeugrad angeordnete Einrichtung zur Überwachung des Reifendruckes,
- **Fig.2**: eine Variante eines Signalgebers der Einrichtung gemäß Fig. 1.

Die Einrichtung ist dafür vorgesehen, das Abfallen des Reifendruckes unter einen vorgegebenen Reifensolldruck anzuzeigen.

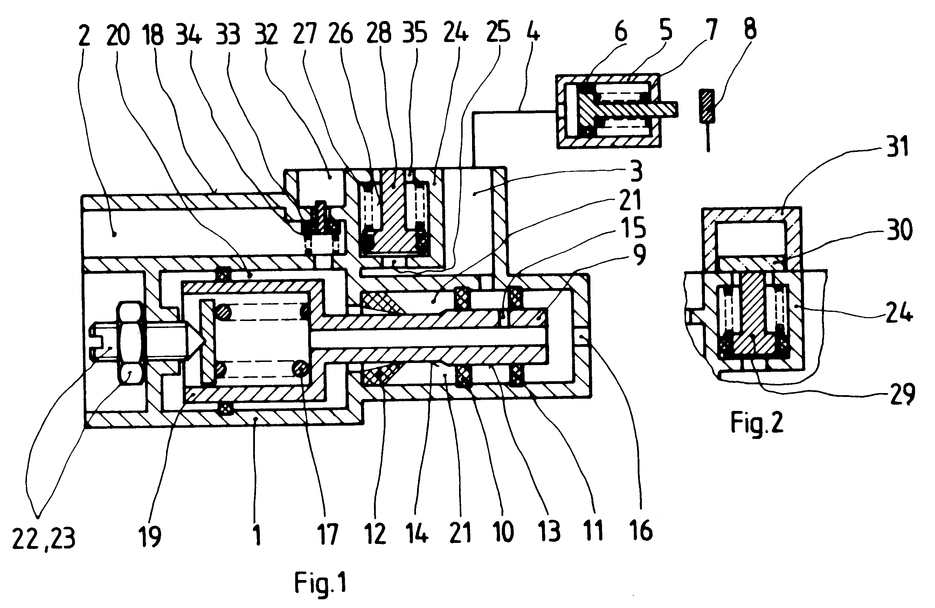

Die Fig.1 zeigt eine am Fahrzeugrad angeordnete druckempfindliche Einrichtung (1) mit einem Druckeinlaß (2), der mit dem Fahrzeugreifen verbunden und mit dem Reifendruck beaufschlagbar ist. Ein Druckauslaß (3) ist über eine Druckleitung (4) mit einer ebenfalls am Fahrzeugrad angeordneten Signalübertragungseinrichtung (5) verbunden. Die Signalübertragungseinrichtung (5) weist ein mit dem Druck des Druckauslasses (3) betätigbares Stellglied (6) auf, derart, daß dieses einen Hub ausführen kann. Mit der dem Druck des Druckauslasses (3) entgegengerichteten Kraft einer Feder (7) nimmt das Stellglied (6), bei drucklosem Druckauslaß (3), seine Ausgangsposition ein. Ein achsfest angeordneter Sensor (8) tastet die Stellung des Stellgliedes (6) ab und erkennt dadurch den Zustand des Reifendruckes.

Die druckempfindliche Einrichtung (1) weist einen Ventilkörper (9) in der Art eines Ventilschiebers auf, der mit einer Ventildichtung (10) ein Einlaßventil (9, 10) und mit einer Ventildichtung (11) ein Auslaßventil (9, 11) bildet. Weiterhin bildet der Ventilkörper (9) mit einem elastischen Körper (12) in der Art einer Dichtmanschette ein in Richtung auf den Druckauslaß (3) hin sich öffnendes selbsttätiges Rückschlagventil (9, 12). Das Rückschlagventil (9, 12) ist zwischen dem Druckeinlaß (2) und dem Einlaßventil (9, 10) der druckempfindlichen Einrichtung (1) angeordnet.

Der Ventilkörper (9) weist zwei unterschiedliche Durchmesser (13, 14) auf, wobei der größere Durchmesser (13) absatzartig in den kleineren Durchmesser (14) übergeht. In der dargestellten Position des Ventilkörpers (9) ist das Einlaßventil (9, 10) geschlossen. Das Auslaßventil (9, 11) befindet sich in der geöffneten Stellung, in der der Druckauslaß (3) über einen Durchlaß (15) mit einem Atmosphärenauslaß (16) der druckempfindlichen Einrichtung (1) verbunden ist. Durch eine Längsbewegung des Ventilkörpers (9) nimmt dieser eine Stellung ein, in der zwischen dem Durchmesser (14) und der Ventildichtung (10) ein Ringspalt entsteht, d.h. in der das Einlaßventil (9, 10) geöffnet ist. Gleichzeitig erfolgt ein Schließen des Auslaßventils (9, 11) in dem der Durchlaß (15) mit der Ventildichtung (11) vom Durchlaß (3) getrennt ist.

In der geöffneten Stellung des Einlaßventils (9, 10) ist der Druckeinlaß (2) über das Rückschlagventil (9, 12) mit dem Druckauslaß (3) verbunden, so daß am Druckeinlaß (2) und am Druckauslaß (3) der Reifendruck ansteht. Durch das geschlossene Auslaßventil (9, 11) ist dann der Druckauslaß (3) vom Atmosphärenauslaß (16) getrennt.

Bei Wegnahme des Reifendruckes am Druckeinlaß (2) wird der am Druckauslaß (3) anstehende Reifendruck durch das Rückschlagventil (9, 12) daran gehindert zum Druckeinlaß (2) zurückzuströmen.

Die Bewegung des Ventilkörpers (9) wird mit dem Reifendruck einerseits und der dem Reifendruck entgegengerichteten Kraft einer Feder (17) gesteuert. Die Feder (17) stützt sich einerseits am Gehäuse (18) und andererseits an einem mit dem Ventilkörper (9) verbundenen Kolben (19) ab. Der über den Druckeinlaß (2) in die druckempfindliche Einrichtung (1) eingeleitete Reifendruck steht in Druckkammern (20, 21) an, derart, daß der Ventilkörper (9) bei Beaufschlagung des Kolbens (19) mit dem vorgegebenen Reifensolldruck gegen die Kraft der Feder (17) eine Stellung einnimmt, in der das Einlaßventil (9, 10) geschlossen und das Auslaßventil (9, 11) geöffnet ist. Mit einer Justiereinrichtung (22, 23) für die Feder (17) ist die Ansprechschwelle der druckempfindlichen Einrichtung (1) einstellbar.

Es ist eine Signalerzeugungseinrichtung (24) vorgesehen, mit einem Druckeinlaß (25) der mit dem Druck des Druckauslasses (3) beaufschlagbar ist. Ein Stellorgan (26) ist mit einer Feder (27) gegen den Druck des Druckeinlasses (3) beaufschlagt. Das Stellorgan (26) weist einen Signalstift (28) auf, der als signalerzeugender Teil dient und für die Dauer der Druckbeaufschlagung der Signalerzeugungseinrichtung (24) mit dem Druck des Druckauslasses (3) durch Durchdringen eines Gehäusedurchbruches (35) sichtbar ist.

Fig.2 zeigt alternativ ein Stellorgan (29), dessen signalerzeugender Teil aus einem Signalkörper (30) gebildet ist, der mit seiner Hubbewegung ein Sichtfenster (31) durchfahren kann. Die signalerzeugenden Teile (28, 30) des Stellorgans (26, 29) können durch Farbgebung optisch hervorgehoben sein.

Die Signalerzeugungseinrichtung (24) ist in dem die druckempfindliche Einrichtung (1) umschließenden Gehäuse (18) integriert, sie kann jedoch auch mit einem separaten Gehäuse in der die druckempfindliche Einrichtung (1) mit der Signalübertragungseinrichtung (5) verbindenden Druckleitung (4) angeordnet sein.

Mit der Position (32) ist ein üblicher Reifenfüllanschluß mit einem Einlaßventil (33, 34) bezeichnet. Dieser hier im Gehäuse (18) der druckempfindlichen Einrichtung (1) integrierter Reifenfüllanschluß (32) kann aber auch an beliebiger Stelle der Felge angeordnet und mit dem Reifeninnern verbunden sein.

Anstelle des Kolbens (19) und der Feder (17) kann auch ein anderes den Reifendruck abtastendes bekanntes System, wie z.B. eine die Bewegung des Ventilkörpers (9) bestimmende Referenzdruckkammer zum Ausgleich der Reifen- und Felgentemperatur (nicht dargestellt) mit dem Gegenstand der Erfindung zusammenwirken.

Die Wirkungsweise der Einrichtung ist wie folgt:

Bei einem Reifendruck, der gleich dem oder höher als der vorgegebene Reifensolldruck ist, steht dieser Reifendruck am Druckeinlaß (2) und in den Kammern (20) und (21) an. Der Ventilkörper (9) befindet sich dann in einer Schaltstellung, in der das Einlaßventil (9, 10) geschlossen und der Druckauslaß (3) über das Auslaßventil (9, 11) mit dem Durchlaß (15) mit dem Auslaß (16) zur Atmosphäre verbunden ist. In diesem Betriebszustand sind das Stellglied (6) der Signalübertragungseinrichtung (5) und das Stellorgan (26) der Signalerzeugungseinrichtung (24) drucklos. Der Sensor (8) empfängt dann kein Signal und der Signalstift (28) bzw. der Signalkörper (30) erzeugt kein optisch wahrnehmbares Signal.

Bei Absinken des Reifendruckes unter den vorgegebenen Reifensolldruck überwiegt die Kraft der Feder (17). Der Ventilkörper (9) wird dadurch in eine Schaltstellung bewegt, in der das Einlaßventil (9, 10) durch Bildung eines Ringspaltes zwischen der Ventildichtung (10) und dem Durchmesser (14) des Ventilkörpers (9) geöffnet ist. Der Druckauslaß (3) ist dann nicht mehr mit dem Atmosphärenauslaß (16) verbunden, weil der Durchlaß (15) die Dichtung (11) in Schließrichtung passiert hat.

In diesem Betriebszustand sind der Druckeinlaß (2) und der Druckauslaß (3) über das Rückschlagventil (9, 12) und das Einlaßventil (9, 10) miteinander verbunden. Das Stellglied (6) und das Stellorgan (26, 29) sind druckbeaufschlagt und in ihre jeweilige Signalstellung gebracht. Der abgesunkene Reifendruck wird durch das am Sensor (8) vorbeitlaufende Stellglied (6) während der Fahrt vom Sensor (8) wahrgenommen und durch den signalerzeugenden Teil (28, 30) des Stellorgans (26, 29) angezeigt.

Bei weiterhin abfallendem Reifendruck, bis zum gänzlich entleerten Reifen, bleibt das Einlaßventil (9, 10) geöffnet und das Auslaßventil (9, 11) geschlossen. Der am Druckauslaß (3) anstehende Druck wird durch das Rückschlagventil (9, 12) daran gehindert, zum niedrigen Druckniveau des Druckeinlasses (2), zurückzuströmen. Dadurch bleiben auch die Signale der Signalübertragungseinrichtung (5) und der Signalerzeugungseinrichtung (24) erhalten, bis am Druckeinlaß (2) wieder der vorgegebene Reifensolldruck ansteht.

Bei Abschalten des elektrischen bzw. elektronischen Teils der Reifendrucküberwachung, oder bei Stillsetzen des Fahrzeuges kann zwar der Sensor (8) keine Information mehr übermitteln, jedoch bleibt die optisch wahrnehmbare Anzeige der Signalerzeugungseinrichtung (24) in Reifennähe erhalten.

Beim Wiederauffüllen des Reifens, d.h. bei Erreichen des vorgegebenen Reifensolldruckes am Druckeinlaß (2) wird, durch Entlüften des Druckauslasses (3) über das Auslaßventil (9, 11) in die Atmosphäre (16), das optisch wahrnehmbare Signal in eine nichtanzeigende Position zurückgesetzt. Hieraus ist das Erreichen des vorgegebenen Reifendruckes sowie die Funktionstüchtigkeit der druckempfindlichen Einrichtung (1) erkennbar.

## Patentansprüche

1. Einrichtung zur Überwachung des Druckes eines Fahrzeugreifens, mit folgenden Merkmalen:
a) es ist eine am Fahrzeugrad angeordnete druckempfindliche Einrichtung (1) zum Abtasten des Reifendruckes vorgesehen, mit einem Druckeinlaß (2), der mit dem Reifendruck beaufschlagt ist, und mit einem Druckauslaß (3), der mit dem Druckeinlaß (2) verbindbar ist;
b) die druckempfindliche Einrichtung (1) weist ein mit dem Reifendruck betätigbares Einlaßventil (9,10) auf, über das der Druckeinlaß (2) und der Druckauslaß (3) bei Unterschreitung eines vorgebbaren Reifendruckes miteinander verbunden sind;
c) die druckempfindliche Einrichtung (1) weist ein mit dem Reifendruck betätigbares Auslaßventil (9,11) auf, über das der Druckauslaß (3) bei einem Reifendruck, der gleich dem vorgegebenen oder höher als der vorgegebene Reifendruck ist, mit einem Atmosphärenauslaß (16) der druckempfindlichen Einrichtung (1) verbunden ist;
d) es ist ein mit dem Druck des Druckauslasses (3) gegen eine Rückstellkraft betätigbares Stellglied (6) einer Signalübertragungseinrichtung (5) vorgesehen,
gekennzeichnet durch folgende Merkmale:
e) die druckempfindliche Einrichtung (1) weist ein zum Druckauslaß (3) hin öffnendes selbsttätiges Rückschlagventil (9, 12) auf, mit dem der Druck am Druckauslaß (3) gegenüber dem Reifendruck sperrbar ist.

2. Einrichtung nach Anspruch 1, gekennzeichnet durch folgende Merkmale:
a) es ist eine Signalerzeugungseinrichtung (24) vorgesehen, die mit dem Druck des Druckauslasses (3) beaufschlagbar ist;
b) mit der Signalerzeugungseinrichtung (24) ist für die Dauer ihrer Druckbeaufschlagung ein z.B. optisch wahrnehmbares Signal (28, 30) erzeugbar.

3. Einrichtung nach Anspruch 1, dadurch gekennzeichnet, daß das optisch wahrnehmbare Signal mit einem durch Beaufschlagung mit dem Druck des Druckauslasses (3) bewegbaren Stellorgan (26, 29) der Signalerzeugungseinrichtung (24) erzeugbar ist.

4. Einrichtung nach Anspruch 3, dadurch gekennzeichnet, daß ein signalerzeugender Teil (28) des Stellorgans (26) aus einem einen Gehäusedurchbruch (35) der Signalerzeugungseinrichtung (24) durchdringenden Signalstift (28) gebildet ist.

5. Einrichtung nach Anspruch 3, dadurch gekennzeichnet, daß der signalerzeugende Teil des Stellorgans (29) aus einem ein Sichtfenster (31) der Signalerzeugungseinrichtung (24) durchfahrenden Signalkörper (30) gebildet ist.

6. Einrichtung nach den vorhergehenden Ansprüchen 4 und 5, dadurch gekennzeichnet, daß der signalerzeugende Teil (28, 30) des Stellorgans (26, 29) durch Farbgebung optisch hervorgehoben ist.

7. Einrichtung nach Anspruch 2, dadurch gekennzeichnet, daß die Signalerzeugungseinrichtung (24) in ein die druckempfindliche Einrichtung (1) umschließendes Gehäuse (18) integriert ist.

8. Einrichtung nach Anspruch 2, dadurch gekennzeichnet, daß die Signalerzeugungseinrichtung (24) in einer den Druckauslaß (3) der druckempfindlichen Einrichtung (1) mit der Signalübertragungseinrichtung (5) verbindenden Druckleitung (4) angeordnet ist.

9. Einrichtung nach Anspruch 1, dadurch gekennzeichnet, daß das selbsttätige Rückschlagventil (9, 12) aus einem elastischen Körper (12) in der Art einer Dichtmanschette gebildet ist, der zwischen dem Druckeinlaß (2) und dem Einlaßventil (9, 10) der druckempfindlichen Einrichtung (1) angeordnet ist.

## Claims

1. A device for monitoring the pressure of a vehicle tyre, having the following features:
a) a pressure-sensitive device (1) mounted on the vehicle wheel is provided for detecting the tyre pressure, having a pressure inlet (2) which is pressurized with the tyre pressure and having a pressure outlet (3) that is arranged to be connected to the pressure inlet (2);
b) the pressure-sensitive device (1) has an inlet valve (9, 10) operable in response to the tyre pressure, by means of which valve the pressure inlet (2) and the pressure outlet (3) are connected to one another when the tyre pressure falls below a predeterminable tyre pressure;
c) the pressure-sensitive device (1) has an outlet valve (9, 11) operable in response to the tyre pressure, by means of which valve the pressure outlet (3) is connected to an outlet (16) of the pressure-sensitive device (1) leading to the atmosphere when the tyre pressure is the same as the given tyre pressure or higher than the given tyre pressure;
d) an actuator (6) of a signal-transmission means (5) operable in response to the pressure at the pressure outlet (3) against a restoring force is provided,
characterized by the following features:
e) the pressure-sensitive device (1) comprises a non-return valve (9, 12) opening automatically towards the pressure outlet (3), by means of which valve the pressure at the pressure outlet (3) can be isolated from the tyre pressure.

2. A device according to claim 1, characterized by the following features:
a) a signal-generating device (24) is provided, which is arranged to be pressurized with the pressure at the pressure outlet (3);
b) by means of the signal-generating device (24) a signal (28, 30), for example a visually detectable signal, can be produced for the duration of its pressurization.

3. A device according to claim 1, characterized in that the visually detectable signal is arranged to be produced by means of an actuator element (26, 29) of the signal-generating device (24) movable as a result of pressurization with the pressure at the pressure outlet (3).

4. A device according to claim 3, characterized in that a signal-generating part (28) of the actuator element (26) is constituted by a signalling pin (28) passing through a housing opening (35) in the signal-generating device (24).

5. A device according to claim 3, characterized in that the signal-generating part of the actuator element (29) is constituted by a signalling body (30) passing across a viewing window (31) of the signal-generating device (24).

6. A device according to the preceding claims 4 and 5, characterized in that the signal-generating part (28, 30) of the actuator element (26, 29) is rendered conspicuous by colouring.

7. A device according to claim 2, characterized in that the signal-generating device (24) is integrated in a housing (18) enclosing the pressure-sensitive device (1).

8. A device according to claim 2, characterized in that the signal-generating device (24) is arranged in a pressure line (4) connecting the pressure outlet (3) of the pressure-sensitive device (1) to the signal-transmission means (5).

9. A device according to claim 1, characterized in that the automatic non-return valve (9, 12) is constituted by a resilient body (12) in the form of a sealing sleeve which is arranged between the pressure inlet (2) and the inlet valve (9, 10) of the pressure-sensitive device (1).

## Revendications

1. Appareil pour surveiller la pression dans un pneumatique de véhicule, ayant les particularités suivantes:
a) il comprend un dispositif sensible à la pression (1), placé sur la roue de véhicule, pour palper la pression du pneu, dispositif qui présente une entrée de pression (2) à laquelle est appliquée la pression du pneu et une sortie de pression (3) qui peut être reliée à l'entrée de pression (2);
b) le dispositif sensible à la pression (1) comporte une soupape d'admission (9, 10) qui peut être actionnée par la pression du pneu et par laquelle l'entrée de pression (2) et la sortie de pression (3) sont reliées entre elles lorsque la pression du pneu descend au-dessous d'une pression pouvant être préfixée;
c) le dispositif sensible à la pression (1) comporte une soupape d'échappement (9, 11) qui peut être actionnée par la pression du pneu et par laquelle la sortie de pression (3) est reliée à une sortie atmosphérique (16) du dispositif sensible à la pression (1) lorsque la pression du pneu est égale ou supérieure à la pression préfixée; et
d) il comprend un élément asservi (6) qui peut être actionné par la pression de la sortie de pression (3), à l'encontre d'une force de rappel, et fait partie d'un dispositif transmetteur de signal (5),
caractérisé en ce que:
e) le dispositif sensible à la pression (1) comprend une soupape antiretour (9, 12) automatique qui s'ouvre vers la sortie de pression (3) et par laquelle la pression régnant à la sortie de pression (3) peut être isolée vis-à-vis de la pression du pneu.

2. Appareil selon la revendication 1, caractérisé en ce que:
a) il comprend un dispositif générateur de signal (24) auquel peut être appliquée la pression de la sortie de pression (3); et
b) le dispositif générateur de signal (24) est capable de produire un signal (28, 30), perceptible visuellement par exemple, pendant la durée d'application d'une pression à ce dispositif.

3. Appareil selon la revendication 1, caractérisé en ce que le signal perceptible visuellement est généré par un organe asservi (26, 29) du dispositif générateur de signal (24), organe qui est déplaçable par application à lui de la pression de la sortie de pression (3).

4. Appareil selon la revendication 3, caractérisé en ce qu'une partie génératrice de signal (28) de l'organe asservi (26) est formée par une tige de signalisation (28) traversant un orifice (35) du boîtier du dispositif générateur de signal (24).

5. Appareil selon la revendication 3, caractérisé en ce que la partie génératrice de signal de l'organe asservi (29) est formée par une pièce de signalisation (30) se déplaçant dans une fenêtre (31) du dispositif générateur de signal (24).

6. Appareil selon les revendications 4 et 5 précédentes, caractérisé en ce que la partie génératrice de signal (28, 30) de l'organe asservi (26, 29) est rendue visuellement plus apparente par une coloration.

7. Appareil selon la revendication 2, caractérisé en ce que le dispositif générateur de signal (24) est intégré dans un boîtier (18) enfermant le dispositif sensible à la pression (1).

8. Appareil selon la revendication 2, caractérisé en ce que le dispositif générateur de signal (24) est installé dans une conduite de pression (4) reliant la sortie de pression (3) du dispositif sensible à la pression (1) au dispositif transmetteur de signal (5).

9. Appareil selon la revendication 1, caractérisé en ce que la soupape antiretour (9, 12) automatique est formée d'une pièce élastique (12) réalisée à la façon d'une garniture d'étanchéité et placée entre l'entrée de pression (2) et la soupape d'admission (9, 10) du dispositif sensible à la pression (1).
